Europäisches Patentamt

European Patent Office

Office européen des brevets

(19)

(11) **EP 1 406 162 A1**

(12) **EUROPEAN PATENT APPLICATION**

(43) Date of publication:
**07.04.2004 Bulletin 2004/15**

(51) Int Cl.$^7$: **G06F 3/12**

(21) Application number: **02102412.0**

(22) Date of filing: **04.10.2002**

| (84) Designated Contracting States: **AT BE BG CH CY CZ DE DK EE ES FI FR GB GR IE IT LI LU MC NL PT SE SK TR** Designated Extension States: **AL LT LV MK RO SI** | (71) Applicant: **AGFA-GEVAERT** **2640 Mortsel (BE)** (72) Inventor: **De Bie, Carolus, c/o Agfa-Gevaert** **2640 Mortsel (BE)** |

(54) **Method and system for printing computer generated images**

(57)    In a method and system for printing computer generated images a multiple-page sheet is prepared for printing on a printing engine, starting from an input of pages in page description language (PDL) files for each page of a multiple-page sheet and having an output in a bitmap format for the multiple-page sheet. The method comprises an imposition method step, the system an imposition module or impositioner. Prior to imposition, each of the page description language (PDL) files of the pages to be combined on the multiple-page single sheet are, in a rendering method step, renderer or rendering module, rendered into bitmaps or pixelmaps, wherein said rendering method step encompasses imposition related operations in dependency on imposition parameters. Thereafter imposition of the bitmap files into a sheet bitmap file is performed.

Fig. 7

EP 1 406 162 A1

**Description**

FIELD OF THE INVENTION

The present invention relates to a method for printing computer generated images, said method comprising a preparation method in which a multiple-page sheet is prepared for printing on a printing device, the preparation method having as an input page description language (PDL) files for each page of a multiple-page sheet, in which preparation method the page description language (PDL) files for the pages of the multiple-page sheet are converted into an output file in bitmap format for the multiple-page sheet, the preparation method comprising an imposition method step.

The present invention also relates to a system for printing computer generated images in the form of a multiple-page sheet on a printing engine, the system and apparatus comprising conversion means for converting an input of a plurality of page description language files (PDL) into a multiple-page sheet file in bitmap format for input in a printing engine, said conversion means comprising imposition means for imposition of a multiple of pages on a multiple-page sheet.

BACKGROUND OF THE INVENTION

Printing engines such as laser printers, plotters, and other printing devices produce an image or "visual representation" on a sheet of paper or the like. A printing engine can print dots on a piece of paper corresponding to the information of a bitmap (or pixelmap where a pixelmap is characterized as having a depth of two or more bits) which forms an input for the printing engine. A bitmap (or bitmap file) forms a digital representation of the visual representation of the page to be printed. A printing device creates a visual representation by printing an array of pixels arranged in rows and columns from the bitmap.

Such a printing engine may be used to produce books, newspapers, pamphlets, posters and other single and multi-page printed matter. The printing press advantageously prints multiple pages of printed matter at the same time onto a single sheet. Besides printing presses other devices used for printing multiple pages at the same time onto a single sheet include e.g. imagesetters and plate setters.

When printing multiple pages, the individual pages are arranged in one or more multiple-page sheets. Each sheet includes a layout of pages that may be ordered or otherwise optimised to facilitate post-printing processes. For example, the layout of the sheet may be arranged such that individual pages are in sequence when folding occurs. The multiple-page sheet may hold 4, 8, 16 etc. pages.

The data for each single page are conventionally in a page description language file (PDL). For that purpose each page may have been produced e.g. by a Page Layout application such as e.g. Quark Express, PageMaker etc., the data having been put in a page description language file (PDL). A page description language (PDL) is a high level language for describing objects to be displayed by an output device. These PDL files form the input for the method of the invention, and the system and apparatus in accordance with the invention. Conversion means that produce a bitmap output file in response to a number of page description language input files are widely used. Such a conversion means has a means (e.g. an interface) for receiving page description data in the form of a number of PDL files. In order to produce a finished sheet, the conversion means interprets the data contained in the PDL files, renders objects within the data into bitmap(s), and after all objects for the sheet are rendered, sends the bitmap file to a printing engine which prints the sheet. The PDL files are representative of the various pages (or sub-pages) of content to be displayed on a given sheet. A PDL file sent to a conversion means specifies objects to be displayed and related information. A PostScript object can, for example, include a pattern of pixels to be displayed, or it can reference an outline curve defining in mathematical terms a shape to be marked. The object may also include other rasterizing information such as font and size.

The layout information describes how the pages are to be arranged to achieve the desired output result. Examples of PDL are PDF and PostScript. Rendering within the framework of the invention means the transformation of the various objects in or of a PDL file into a bitmap.

The conversion means are often part of a computer workstation. The combination of the conversion means and the printing engine may form part of a printing device, sometimes including auxiliary devices such as devices for making PDL files (such as scanners), which devices may also form part of a computer workstation. A term commonly used for such system is a "prepress workflow system".

Within the conversion process, imposition forms an important method. Likewise within the conversion means an imposition means (sometimes also called an imposition module) forms an important part. Imposition is the pre-printing process of arranging the pages for a sheet to achieve a proper sequence or position of each page relative to other pages on the sheet. Imposition is performed to facilitate post-printing processes. These processes may include fold and cut operations possibly followed by some form of binding. Conventional imposition processes are executed on a computer workstation prior to the printing process. The output of the known imposition process is a single sheet PDL file that includes all the data required (including external references if any) to print the sheet by a printing engine. This multiple-page single sheet PDL file is thereafter rendered in a bitmap or pixelmap file. The bitmaps or pixelmaps form an input for a printing engine and are printed on the surface of a multiple-page sheet by a printing engine. Such a conventional method, system and apparatus is e.g. known from US 6,046,818 in which the output of the imposition process is a single PDL file that includes all the data required (including external references if any) to print the sheet by a printing device.

Rendering, i.e. PDL-to-bitmap transformation is another key processing-component of a pre-press workflow system. Its performance is highly dependent on the available system resources (memory, CPU power) of the hardware platform the application is running at. The minimum system requirements are mainly defined by the format (A4, A3) of the PDL documents and the resolution of the bitmap generated. As described above, the imposition (or in a system the imposition module, which is another key component of a modern pre-press production systems), puts multiple pages on a larger sheet (2-UP, 4-UP, 8-UP, ...) .

The rendering process, i.e. the translation from page description languages like PostScript or PDF to rastered output formats, is a very cumbersome process.

The performance of a renderer (also known as RIP, i.e. Raster Image Processor), the renderer being the means used for or in the rendering process, is nearly proportional to the complexity of a job as long as these jobs can run completely in the available memory, i.e. the available RAM (Random Access Memory). The more complex a job is, the more intermediate information needs to be stored in the renderer, prior to final output. For typical jobs in commercial and packaging workflows, the size of the intermediate storage area can be considered as nearly proportional to the size of the output . This means that for increasingly larger formats, the renderer will need more memory in order to guarantee the proportional performance relation. If the renderer can not run from memory anymore, most operating systems or the renderer itself will start a mechanism of swapping temporarily non-used memory to disk. This virtual memory mechanism causes increased execution times, that are no longer proportional to the complexity of the job but that are larger.

Imposition enlarges the size of the document, and also the size of the output, and therefore increases the minimum system resources of the PDL to bitmap conversion process and conversion device as well as restricts the speed of the process. This restriction holds in particular for VLF (very large format) impositions and for large speeds.

SUMMARY OF THE INVENTION

It is an object of the invention to provide a method, system and apparatus to reduce one or more of the above cited problems, by reducing the complexity of the rendering process.

To this end the method in accordance with the invention is characterized in that, prior to imposition, each of the page description language (PDL) files of the pages to be combined on the multiple-page single sheet are, in a rendering method step, rendered into bitmaps or pixelmaps, wherein said rendering method step encompasses imposition related operations in dependency on imposition parameters, whereafter imposition of the bitmap files into a sheet bitmap file is performed.

The system and apparatus in accordance with the invention is characterized in that the conversion means comprise rendering means for rendering, prior to imposition, each PDL page file into a bitmap file, the rendering being performed in dependency on imposition data for the relevant page, and send the resulting bitmap files to an imposition means, for imposition of the multiple-page single file.

As described above, imposition enlarges the size of a document. When applied before the PDL to bitmap rendering, it increases the minimum system resources of the PDL to bitmap rendering process, because a very large PDL file has to be rendered. In order to avoid this in the method, system and apparatus in accordance with the invention, imposition is performed after PDL-to bitmap rendering. This indeed lowers the minimum system requirements for the PDL to bitmap rendering but, as the inventors have realized, a simple rendering of the PDL files of the pages to bitmaps prior to imposition, independent of the imposition, may unfortunately cause new bottle-necks in the pre-press system. The inventors have realized that scaling, rotating, accurate positioning of one bit per pixel images of a sheet bitmap file put a considerable extra load (disk access and CPU) on the hardware system too, reducing the positive effects. In a number of cases the bitmap to bitmap imposition method step produces artifacts on the output generated, i.e. on the printed sheet, and although it is theoretically possible to avoid these artifacts, this puts a severe restriction on the performance of the system.

The invention avoids or at least reduces such artifacts and lowers the system requirements of the bitmap imposition means mentioned above. This is achieved by moving imposition (and/or output) related operations, that can be executed at the PDL page level (e.g. scaling, translating, rotating, pixel alignment), to the PDL-bitmap rendering process of each page followed by imposition of the resulting bitmaps of the pages in a bitmap of the sheet to be printed. The PDL-bitmap rendering of each page is done in dependency on the position of said page on the sheet (and sometimes on other parameters such as the number of the sheet), in general in dependency of the imposition (and/or output), i.e. in dependency of imposition data. This can e.g. be accomplished by associating data relating to the arrangement of the page on the final sheet with the PDL of each page. The term "associated with" is to be broadly interpreted as including any attached data or any link or referral to data relating to the imposition of the relevant page to be effected after or during PDL-bitmap conversion of the relevant page but before imposition of the bitmap of the separate pages to the bitmap of the multi-page sheet. PDL to bitmap (or pixelmap) rendering entails a (matrix) transformation of data. The transformation matrix effects the conversion of data from user space (PDL application space) to a device space; it maps coordinates in user space into device (bitmap or pixel) space. The render transformation matrix describes the transformation of user space to device space. This transformation is in principle performed for each output pixel during the rendering process. Imposition entails transformations such as scaling, rotating, translating, skewing, etc. on a page level. If rendering is done on each page, independent of imposition, whereafter imposition is performed, imposition requires a novel transformation matrix to be established for the sheet, taking into account the required transformations (scaling, rotating etc.) for each page due to the imposition and this transformation matrix then has to be applied to each pixel of the total sheet. So for each pixel of the sheet a novel and often complex calculation has to be performed. This puts a very considerable load on the system and reduces the process speed. This is avoided in the present invention.

In the method, system, and apparatus in accordance with the invention, the imposition related page transformations such as scaling, rotating, translation etc. are done prior to imposition during the rendering of the pages. For each page the render transformation matrix is multiplied with a page transformation matrix in which imposition parameters are used. This matrix multiplication for each page does not require much extra effort being only one matrix multiplication, and the resulting rendering for each page does not require much extra effort, since it does not make much difference whether one transformation matrix is used or another one. The imposition itself is only used to put the pre-rotated, pre-scaled, pre-aligned pages on a single sheet, which does not require much extra load nor reduces the speed of the process. Many of the complicated calculations have been avoided. Thus the invention results in a bitmap imposition process method or means, or component that uses and needs a negligible extra amount of system resources. The scaling, rotating and pixel alignment operation, which is applied at the page level, does not cause much of an extra load on the PDL to bitmap conversion process. Scaling, translation, rotating, pixel alignment etc. operations can, on a page level, usually be performed with relatively simple transformations, that can be done fast and accurately, not requiring extra load or causing a reduction in speed of the conversion process.

Furthermore, since in the method and apparatus in accordance with the invention imposition related scaling, rotating and further manipulation are executed in the PDL to bitmap rendering, the above-mentioned artifacts do not occur or are at least substantially reduced.

In preferred embodiments of the invention, during the rendering step of each page, in addition to making the rendering dependent on imposition parameters (which basically means in terms of transformation matrices that the render transformation matrix is multiplied with an imposition matrix encompassing the scaling, rotating, etc associated with the imposition of that particular page), the rendering of each page may be made dependent on further parameters (basically meaning that a further multiplication of the rendering matrix with a further transformation matrix per page is applied). One such set of further parameters may be output parameters. A further example is pixel alignment parameters to align a page on a pixel.

Another way of describing the basic idea of the invention is that rendering is performed prior to imposition and that pre-binding is performed during rendering, pre-binding being the act of rendering independent pages according to their position on the flat, i.e. on the imposed multiple-page sheet.

Preferably, during rendering of the page description files of the pages, the rendering method steps encompass a pixel alignment process.

It is remarked that the invention requires an integration of imposition (and/or other post-rendering method steps) in the pre-press workflow system. The printing process and the arrangement of the pages on the sheet(s) should be known in order to provide data (parameters) enabling to effect the proper scaling, translation, rotating etc. during the PDL-bitmap conversion of each page. The total process must be viewed as a whole. Normally, when a PDL file is made, it is completely independent of any other page or arrangement of pages. In the invention, the printing process as a whole is contemplated, and imposition is integrated in the pre-press workflow system.

Preferably, the imposition parameters comprise at least imposition parameters relating to rotation of the pages associated with imposition.

It is remarked that, as for many a process, there is some freedom to fine-tune parameters. Preferably, all major page transformations associated with imposition are taken into account. However, within the broadest concept of the invention, imposition parameters are used, not necessarily all parameters. Preferably, however, at least rotating, as one of the most important aspects of imposition of the page, is effected.

The invention is applicable to any pre-press operation which lays out independent PDL objects on a larger surface. For example, the method is suitable for a step & repeat pre-press operation of a packaging pre-press workflow system, or the same for bank notes. The term "page" is therefore to be broadly interpreted as an independent PDL object, or an independent assembly of PDL objects, and "sheet" is a larger surface on which the PDL objects are impositioned.

Within the concept of the invention a "means for conversion" and "means for imposition" as well as "means for rendering" is to be broadly understood and to comprise e.g. any piece of hardware (such as a converter, an impositioner, a renderer), any circuit or subcircuit designed for performing a conversion, imposition, rendition as described, as well as any piece of software (computer program or sub program or set of computer programs, or program code (s)) designed or programmed to perform a conversion, imposition, rendering operation in accordance with the invention, as well as any combination of pieces of hardware and software acting as such, alone or in combination, without being restricted to the exemplary embodiments given below.

The invention may also be embodied in any computer program comprising program code means for performing a method in accordance with the invention when said program is run on a computer, as well as in any computer program product comprising program code means stored on a computer readable medium for performing a method in accordance with the invention when said program is run on a computer.

These and other aspects of the invention are apparent from and will be elucidated with reference to the embodiments described hereinafter.

BRIEF DESCRIPTION OF THE DRAWINGS

In the drawings:

Fig. 1 illustrates schematically how multiple pages are combined into a multiple-page single sheet;
Fig. 2 illustrates schematically the preparation, including imposition, method known from US 6,046,818;
Fig. 3 illustrates in the form of a flow chart the process as known from US 6,046,818;
Fig. 4 illustrates schematically a system for a method of the type as known from US 6,046,818;
Fig. 5 illustrates schematically a method in which rendering independent of imposition is done prior to imposition;
Fig. 6 illustrates schematically a system for a method in which rendering independent of imposition is done prior to imposition;
Fig. 7 illustrates schematically a method in accordance with the invention;
Fig. 8 illustrates schematically a system in accordance with the invention.

The figures are not drawn to scale. Generally, identical components are denoted by the same reference numerals in the figures.

DETAILED DESCRIPTION OF THE INVENTION

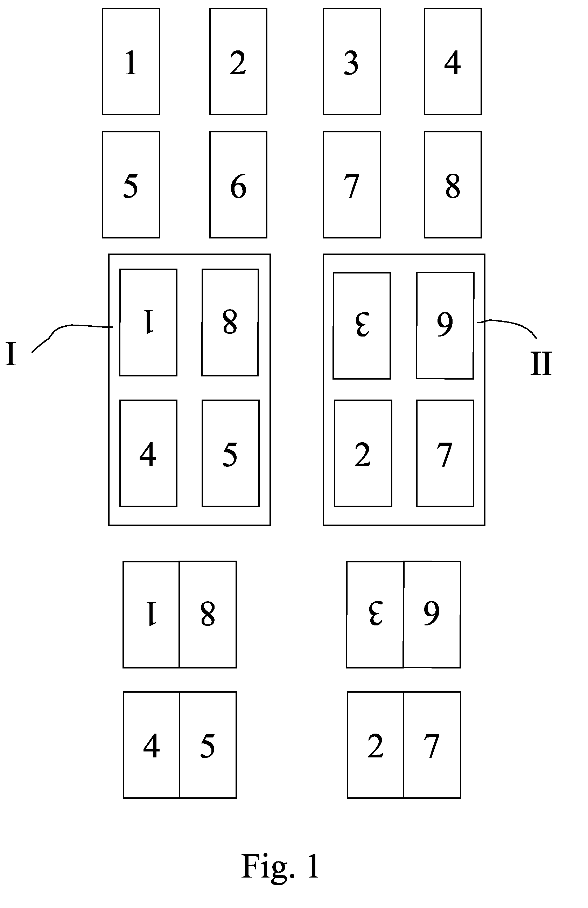

Figure 1 illustrates schematically that a number of pages (1 to 8) are assembled on sheets I and II. From said sheets, combinations (in this example pairs) of pages are cut (lowest part of the drawings), which may then be bound into a part of a book for instance. In this schematic figure all pages are shown in upright (or for some in upside down) position.

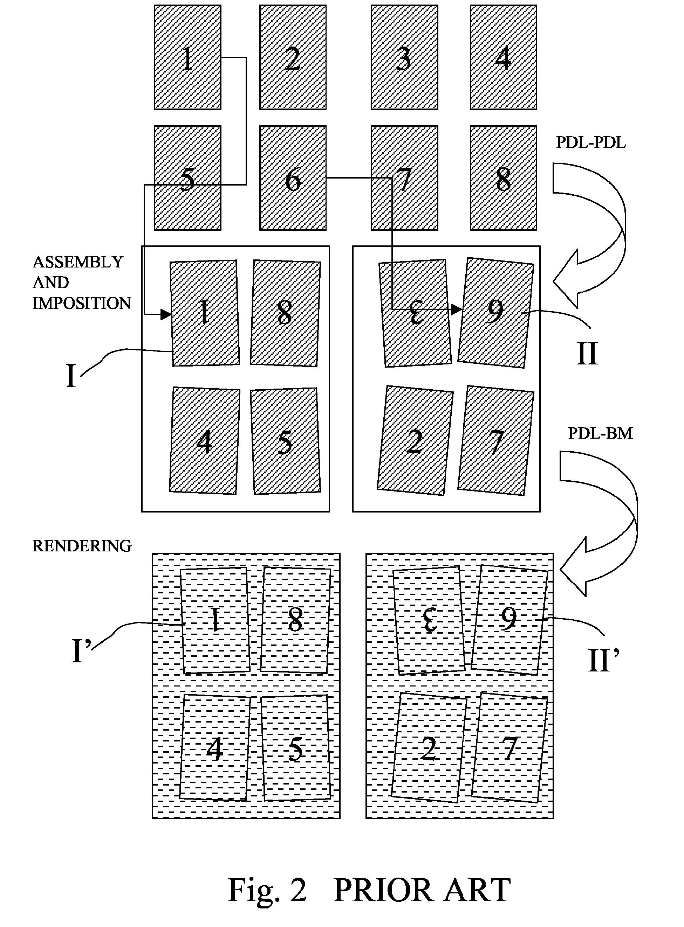

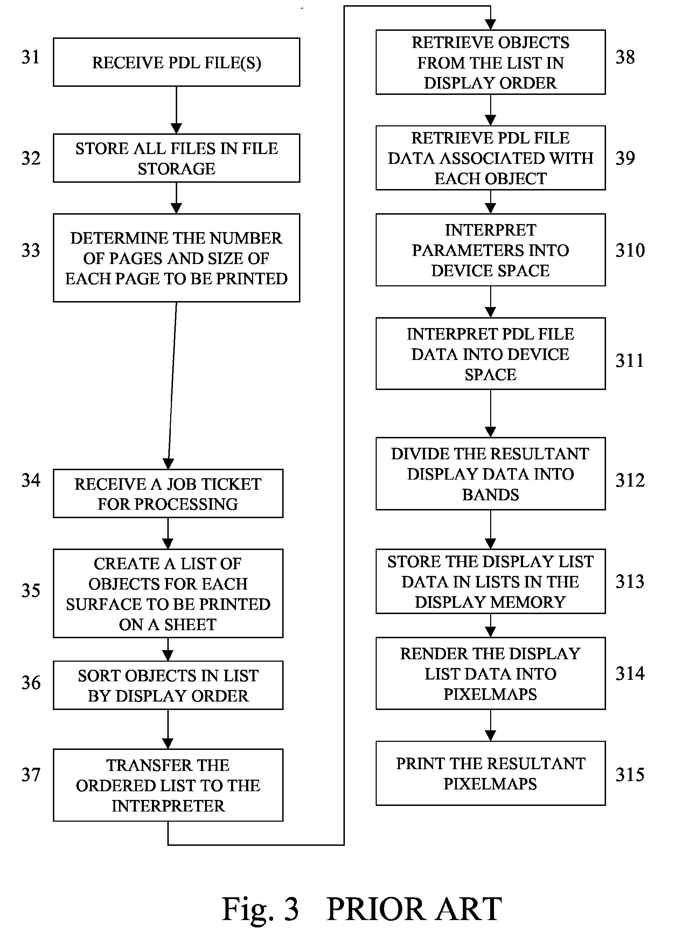

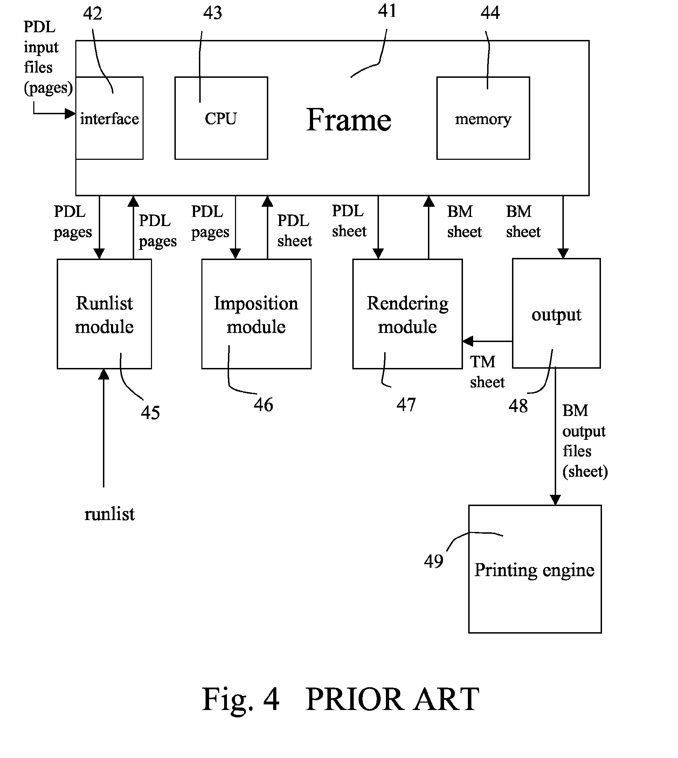

Fig. 2 illustrates schematically the preparation, including imposition, method known from US 6,046,818. In this and following figures, diagonally hatched pages or parts of pages stand for data in PDL format, whereas dashed lines indicate pages or part of pages in bitmap or pixelmap format. The pages in PDL format are assembled and impositioned into a PDL format file for each of the sheets I and II. This is schematically indicated by the arrow above which is indicated PDL-PDL, to indicate the input and output format of the process. Imposition is the pre-printing process of arranging the pages for a sheet to achieve a proper sequence or position of each page relative to other pages on the sheet. Imposition is performed to facilitate post-printing processes. These processes may include fold and cut operations possibly followed by some form of binding. Imposition does not just entail flipping certain pages, but also more complex operations such as rotation, scaling, pixel alignment etc. In figure 2 this is schematically shown by the fact that some of the pages are slightly rotated. Thereafter the sheet-PDL files are rendered, i.e. the PDL files for the sheets are transformed into sheet bitmap files, which is schematically indicated by the arrow above which is indicated PDL-BM, to indicate the input and output format of the process.

Fig. 3 illustrates in the form of a flow-chart the method known from US 6,046,818. The PDL files for the pages are received (31), they are stored (32), the number of pages and sizes of each page to be printed is determined (33), a job ticket is received (34), with which a list of objects for each surface to be printed on a sheet is created (35), the objects are sorted (36), the ordered list is transferred to an interpreter (37), the objects are retrieved (38), as well as the PDL file data associated with each object (39), parameters and data are interpreted into device space (310, 311), the resultant display data are divided into bands (312), the display list data are stored in display memory (313), and finally before print (315), the display list data are rendered into pixel maps (315) .

Figure 4 illustrates schematically a device for a method of the type as known from US 6,046,818. The drawing is schematically indicating the flow of data, and several elements of the device. A means or module may be any piece of hard- or software or combination thereof to perform the indicated function, within the flow. Also, the different modules are indicated separate from each other for the sake of clarity; this is not to be restrictively interpreted as signifying that such modules are physically separate elements (although they might be). Often the modules will be in the form of program codes operated within a computer workstation. Such a computer workstation itself may be a single apparatus, but also form part of a network, or even be distributed in separate locations, for instance when files are sent over an internal network or even over internet between devices.

An input of PDL files (the input for the conversion means) for a number of pages is via an interface 42 received by a central frame 41, which comprises a CPU (central processing unit) 43 and a memory 44. A runlist is made for the PDL pages in or by runlist module 45. This provides PDL objects in display order with layout. Imposition module 46 assembles and impositions the PDL objects into a PDL sheet file and impositions the object on the sheet, creating a PDL sheet file. Rendering module 47 transforms the PDL sheet file into a bitmap (BM) sheet, using a transformation matrix "TM sheet". This forms the output of the conversion means. The BM output file(s) are then sent to a printing engine 49 (via output 48) where the sheet or sheets are printed.

In this known method therefore, rendering (PDL-bitmap transformation) is a final step, i.e. imposition is applied prior to PDL-bitmap transformation. Imposition enlarges the size of the document, and when applied before the PDL to bitmap transformation, increases the minimum system resources (such as display memory (see step 313)) needed for the PDL to bitmap transformation process. The performance of a renderer (also known as RIP, i.e. Raster Image Processor), the renderer being the means used for or in the rendering process, is nearly proportional to the complexity of a job as long as these jobs can run completely in the available memory, i.e. the available RAM (Random Access Memory). The more complex a job is, the more intermediate information needs to be stored in the renderer, prior to final output. For typical jobs in commercial and packaging workflows, the size of the intermediate storage area can be considered as nearly proportional to the size of the output. This means that for increasingly larger formats, the renderer will need more memory in order to guarantee the proportional performance relation. If the renderer can not run from memory anymore, most operating systems will start a mechanism of swapping temporarily non-used memory to disk. This virtual memory mechanism causes increased execution times, that are no longer proportional to the complexity of the job but that are larger.

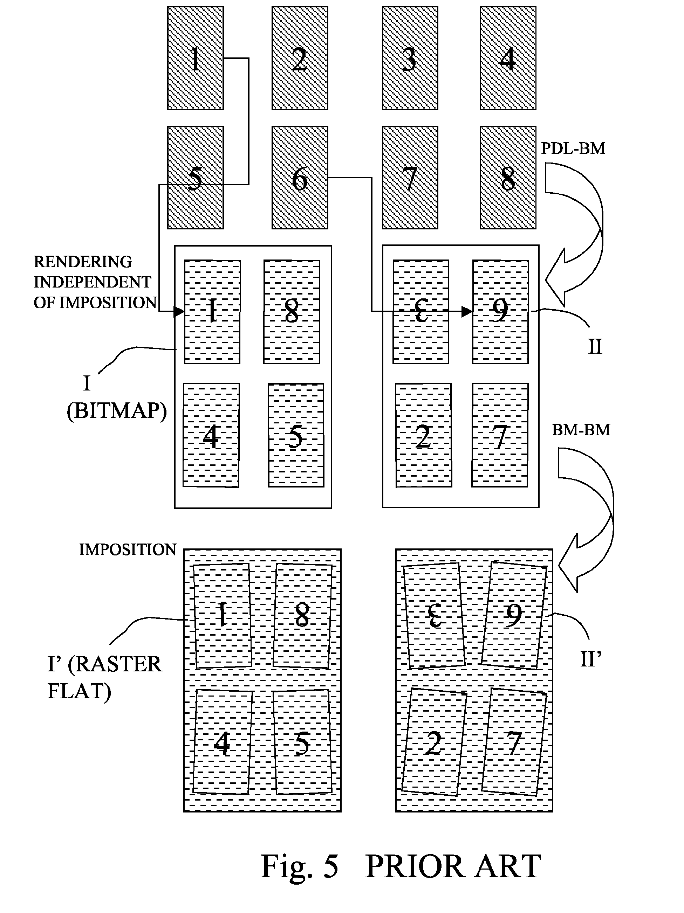

Fig. 5 schematically illustrates a method in which a number of PDL files are rendered into bitmap or pixelmap files, and then a large bitmap or pixelmap file is made. Imposition of the pages is not done, be it that flipping of pages may be effected when the different bitmap files are assembled into one large sheet bitmap file. Thereafter imposition is effected. Imposition is thus performed after PDL-to bitmap rendering. This indeed lowers the minimum system requirements for the PDL to bitmap rendering but, as the inventors have realized, a simple rendering of the PDL files of the pages to bitmaps prior to imposition, independent of the imposition, may unfortunately cause new bottle-necks in the pre-press system. The inventors have realized that scaling, rotating, accurate positioning of one bit per pixel images of a sheet bitmap file (which is necessary with a method as shown in Fig. 5) put a considerable extra load (disk access and CPU) on the hardware system too, reducing the positive effects. In a number of cases, the bitmap to bitmap imposition method step produces artifacts on the output generated, i.e. on the printed sheet. Although it is theoretically possible to avoid these artifacts, this puts a severe restriction on the performance of the system.

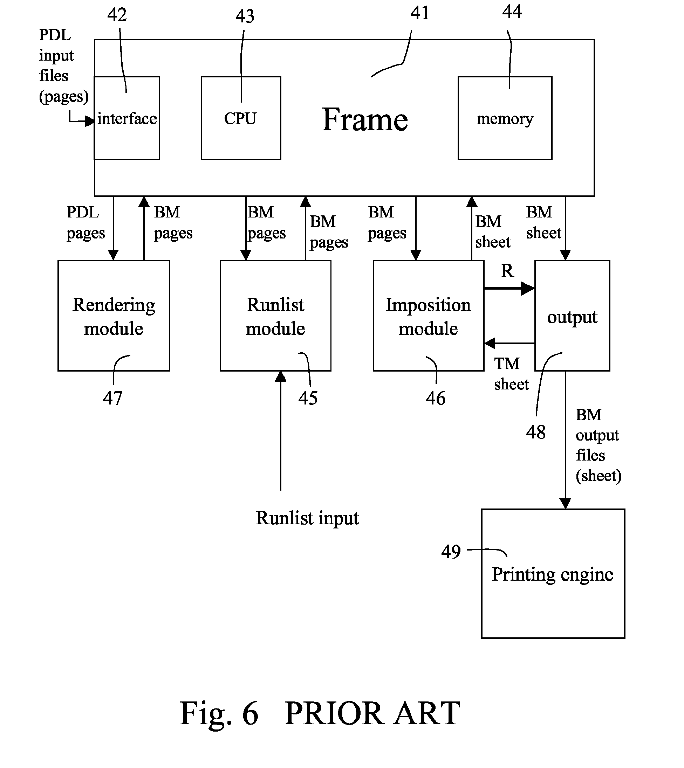

Fig. 6 illustrates a device for a method as illustrated in Fig. 5. The rendering module is now placed (seen in the flow of data) before the imposition module. Rendering is done page per page, independent of the imposition. The imposition module 46 request (R) the transformation matrix TM from the output module 48.

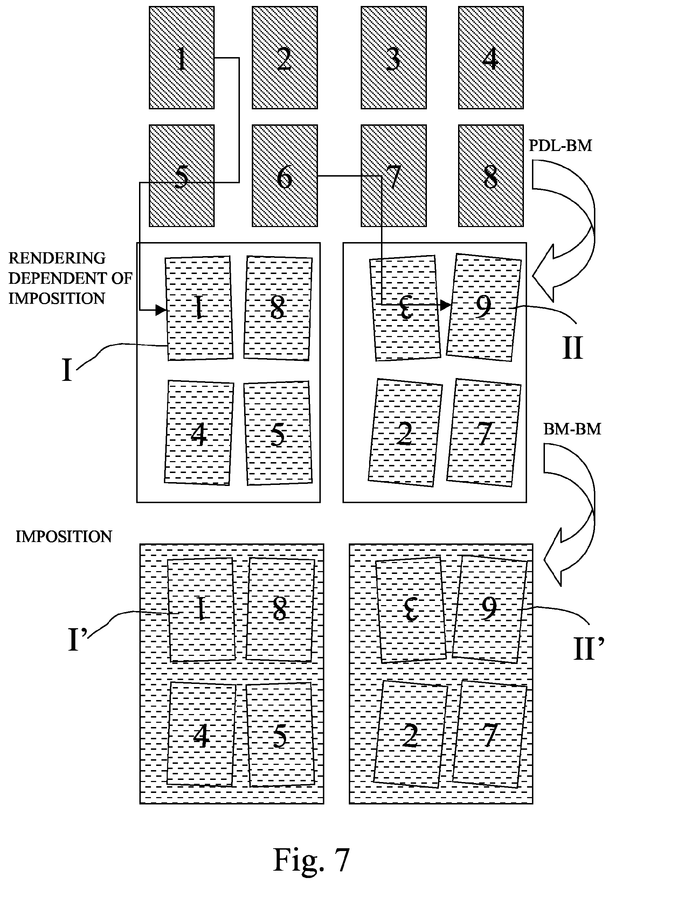

Figure 7 illustrates the method in accordance with the invention.

Analogously to figure 5, the PDL files for the pages are rendered, but rendering is done in such manner that imposition is taken into account. This means amongst others that the transformation matrix for each page may be different, since each page may be scaled, rotated, etc. differently depending on its position on a sheet, on the printing engine and depending on after-print processing. The rendering of each page (i.e. PDL-bitmap transformation) as such is therefore only slightly more complicated, because a matrix multiplication for each page has to be performed. Since rendering requires a transformation matrix any way, multiplication of matrices for each page does not constitute an appreciable extra load on the process or system. Such multiplication of matrices can within the invention simply be done by multiplying the scaling, skewing etc page matrix with the original rendering matrix, which is a simple process, as long as for one file simple matrix multiplication can be done.

Therefore the extra "complication", in so far as rendering of each page separately is concerned, does not considerably increase the process. The advantage comes at the second step, i.e. the actual imposition of the sheet. Since during rendering the pages constituting the sheet are already pre-rotated, pre-scaled etc, in accordance with the imposition, the sheet TM matrix is very simple and straightforward, not requiring much data manipulation, disk access or load.

A two-dimensional matrix transformation can be described mathematically by e.g. by:

$$\begin{bmatrix} a & b & \delta x \\ c & d & \delta y \\ 0 & 0 & 1 \end{bmatrix}$$

This matrix transforms a coordinate pair (x,y) (e.g. in user space) into another coordinate pair (x',y') (e.g. in device space) according to:

$$x' = ax + by + \delta x$$

$$y' = cx + dy + \delta y$$

Scaling by a factor is achieved e.g. by:

$$T_s = \begin{bmatrix} sx & 0 & 0 \\ 0 & sy & 0 \\ 0 & 0 & 1 \end{bmatrix}$$

In this matrix, sx and sy constitute the scaling parameters of the matrix $T_s$.

Clockwise rotation is achieved e.g. by:

$$T_r = \begin{bmatrix} \cos \theta & -\sin \theta & 0 \\ \sin \theta & \cos \theta & 0 \\ 0 & 0 & 1 \end{bmatrix}$$

In this matrix, $\theta$ constitues the rotation parameter.

Translation is achieved e.g. by:

$$T_t = \begin{bmatrix} 1 & 0 & \delta x \\ 0 & 1 & \delta y \\ 0 & 0 & 1 \end{bmatrix}$$

In this matrix, $\delta x$ and $\delta y$ are the translation parameters.

A sequence of transformations can be performed by subsequent multiplication of transformation matrices, e. g. a scaling followed by a translation followed by a rotation is described by a transformation matrix T':

$T' = T_r T_t T_s$. The parameters of this final matrix T' will depend on the parameters of the matrices $T_s$, $T_t$ and $T_r$, and can be calculated from these parameters.

Matrix multiplication in itself is a rather simple operation once the parameters are known.

Within a method in accordance with the invention, rendering is performed in dependence on imposition parameters. This means, when expressed in terms of transformation matrices, that the transformation matrix for a simple transformation of user space to device space is multiplied, for each page, with a page imposition transformation matrix

7

(which may in itself be a multiplication of translation, rotation, scaling, skewing matrices) which is calculated on the basis of imposition related operations for that particular page. After rendering, the bitmap file corresponds to a pre-rotated-pre-scaled pre-aligned page. The imposition itself is only used to put the pre-rotated, pre-scaled, pre-aligned pages on a single sheet, which does not require much extra load or reduces the speed of the process. Many of the complicated calculations have been avoided.

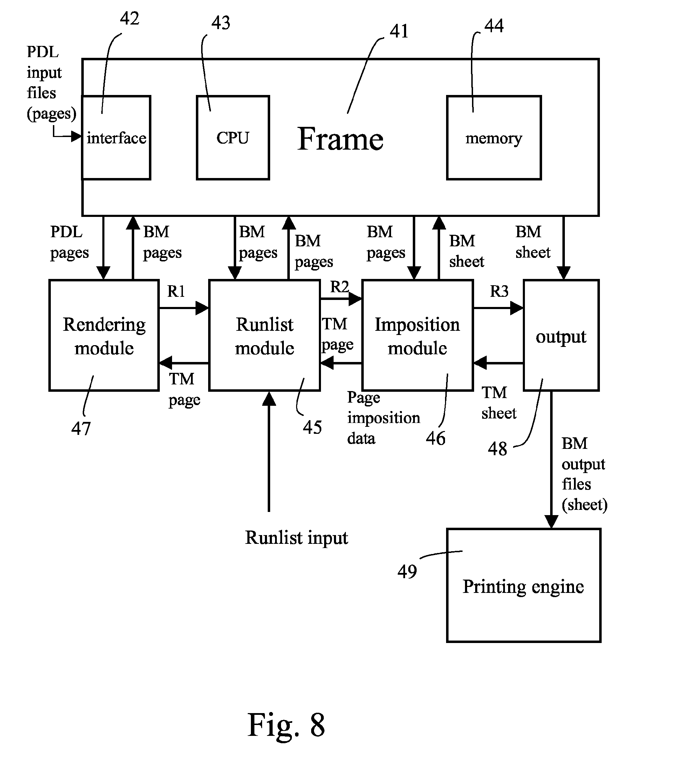

In Fig. 8, this is schematically indicated by the "TM page" (TM stands for transformation matrix) coming from the imposition module 46 (which schematically indicates the dependence of this matrix on imposition parameters) as an input for the rendering module 47.

Figure 8 illustrates a system in accordance with the invention. The system has some elements in common with the system as shown in Figure 6. The characterizing difference is that a transformation matrix depending on the imposition scheme is sent to the rendering module 47, which renders the input PDL page files, using this matrix. The rendering module 47 requests (R1) a page transformation matrix (TM page) from the runlist module 45. The runlist module 45 passes the request (R2) to the imposition module 46, specifying the position of a page on the sheet. The imposition module 46 requests (R3) the device transformation matrix from the output module 48. The device matrix may for instance be obtained from a component X, or from a list. The imposition module takes the returned device transformation matrix, the specified position on the page and the imposition scheme into account when returning the optimized page transformation matrix to the runlist module. The optimized page transformation matrix is returned to the runlist module, and via the runlist module to the rendering module. The rendering module converts the incoming PDL page to bitmap in accordance with the returned optimized page transformation matrix, in which transformation matrix therefore the device, the imposition scheme and the position of the page on the sheet have already been taken into account. The imposition process step itself is very simple, the already pre-aligned, pre-rotated etc pages are put in their proper position, but no complicated manipulation of data is needed. It is to be understood that although in figure 6 as well as in figure 8 a transformation matrix "TM sheet" is denoted, the transformation matrix "TM sheet" in figure 8 is a simple matrix, whereas in figure 6 the transformation matrix "TM sheet" is a very complicated one. There where mention is made of a transformation matrix TM or request of such a matrix, it is to be understood that this may be in the form of a matrix itself, or in any form of supplying information enabling to make or construct such a matrix, e.g. a set of parameters enabling the rendering module (or another module) to construct or find (in which case the information can e.g. be a number with which an entry in a list comprising set of data can be found) the requested transformation matrix. One or more of the modules, in particular the imposition and output module, may comprise or may be linked to, and in preferred embodiments comprise or are linked to, input means for enabling a user to input or change a choice of printing engine and/or the imposition scheme. In case the modules are or comprise programs, parts of programs or a set of program codes to be run on a computer, which will often be the case, such means may take the form, and preferably have the form of a program or program codes, enabling a list of possible choices to be made (a list of devices, a list of imposition schemes etc.) to be displayed on a display screen of a computer, and allowing for selection by a user of an item from a display list, for instance by putting a cursor or an arrow (when use is made of a mouse) on the item to be chosen from the display list and pressing the enter button or clicking the mouse button. The device then has means (e.g. program code) to communicate this chosen item to the appropriate module at the appropriate step in the method. The system then comprises input means for inputting a choice of device and/or imposition scheme, as described above. In effect such a choice changes the printing engine and/or imposition parameters, and this will effect a change in the transformation matrices used in the process. It is thus, using a system and method in which the possibility of such a change of parameters is given, possible for the user to change easily and without complications the printing engine as well as the imposition scheme without requiring high memory load or high CPU load.

The table given below summarizes the memory requirements and imposition load for the various methods. It will be clear that the method and system in accordance with the invention pairs a relatively low memory requirement to a relatively low imposition load, which the other two methods do not accomplish.

| | Rendering after imposition (Figure 3) | Imposition after rendering | |
| --- | --- | --- | --- |
| | | Rendering pages independent of imposition (Fig. 5) | Rendering pages dependent on imposition (Fig. 7), invention |
| Memory requirements | High | Low | Low |
| CPU imposition load | Low | High | Low |

It will be appreciated by persons skilled in the art that the present invention is not limited by what has been particularly shown and described hereinabove. The invention resides in each and every novel characteristic feature

## EP 1 406 162 A1

and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

The present invention has been described in terms of specific embodiments, which are illustrative of the invention and not to be construed as limiting. The invention may be implemented in hardware, firmware or software, or in a combination of them. Other embodiments are within the scope of the following claims.

In short, some embodiments of the invention can be described as follows:

In a method and system for printing computer generated images, a multiple-page sheet is prepared for printing on a printing engine, starting from an input of pages in page description language (PDL) files for each page of a multiple-page sheet and having an output in a bitmap format for the multiple-page sheet. The method comprises an imposition method step, the system an imposition module or impositioner. Prior to imposition, each of the page description language (PDL) files of the pages to be combined on the multiple-page single sheet are, in a rendering method step, renderer or rendering module, rendered into bitmaps or pixelmaps, wherein said rendering method step encompasses imposition related operations in dependency on imposition parameters. Thereafter, imposition of the bitmap files into a sheet bitmap file is performed.

## Claims

1. A method for printing computer generated images, said method comprising a preparation method in which a multiple-page sheet is prepared for printing on a printing engine, the preparation method having as an input page description language (PDL) files for each page of a multiple-page sheet, in which preparation method the page description language (PDL) files for the pages of the multiple-page sheet are converted into an output file in bitmap or pixelmap format for the multiple-page sheet, the preparation method comprising an imposition method step, **characterised in that**, prior to imposition, each of the page description language (PDL) files of the pages to be combined on the multiple-page single sheet are, in a rendering method step, rendered into bitmaps or pixelmaps, wherein said rendering method step encompasses imposition related operations in dependency on imposition parameters, whereafter imposition of the bitmap or pixelmap files into a sheet bitmap file is performed.

2. A method as claimed in claim 1, **characterized in that** the imposition parameters at least comprise parameters associated with rotating the page in dependence on imposition.

3. A system for printing computer generated images in the form of a multiple-page sheet on a printing engine, the system comprising conversion means for converting an input of a plurality of page description language files (PDL) into a multiple-page sheet file in bitmap or pixelmap format for input in a printing engine, said conversion means comprising imposition means for imposition of a multiple of pages on a multiple-page sheet, **characterised in that** the conversion means comprises rendering means for rendering, prior to imposition, each PDL page file into a bitmap or pixelmap file, the rendering being performed in dependency on imposition parameters for the relevant page, and sends the resulting bitmap or pixelmap files to an imposition means, for imposition of the multiple-page single file.

4. A system as claimed in claim 3, **characterized in that** the system comprises input means for enabling a user to input or change printing engine parameters and/or imposition parameters.

5. A computer program comprising program code means for performing the method of claim 1 or claim 2 when said program is run on a computer.

6. A computer program product comprising program code means stored on a computer readable medium for performing the method of claim 1 or claim 2 when said program is run on a computer.

Fig. 1

Fig. 2   PRIOR ART

31 — RECEIVE PDL FILE(S)

32 — STORE ALL FILES IN FILE STORAGE

33 — DETERMINE THE NUMBER OF PAGES AND SIZE OF EACH PAGE TO BE PRINTED

34 — RECEIVE A JOB TICKET FOR PROCESSING

35 — CREATE A LIST OF OBJECTS FOR EACH SURFACE TO BE PRINTED ON A SHEET

36 — SORT OBJECTS IN LIST BY DISPLAY ORDER

37 — TRANSFER THE ORDERED LIST TO THE INTERPRETER

38 — RETRIEVE OBJECTS FROM THE LIST IN DISPLAY ORDER

39 — RETRIEVE PDL FILE DATA ASSOCIATED WITH EACH OBJECT

310 — INTERPRET PARAMETERS INTO DEVICE SPACE

311 — INTERPRET PDL FILE DATA INTO DEVICE SPACE

312 — DIVIDE THE RESULTANT DISPLAY DATA INTO BANDS

313 — STORE THE DISPLAY LIST DATA IN LISTS IN THE DISPLAY MEMORY

314 — RENDER THE DISPLAY LIST DATA INTO PIXELMAPS

315 — PRINT THE RESULTANT PIXELMAPS

Fig. 3   PRIOR ART

PDL
input
files
(pages)

42    43    41    44

interface    CPU    Frame    memory

PDL
pages    PDL
pages    PDL
pages    PDL
sheet    PDL
sheet    BM
sheet    BM
sheet

Runlist
module    Imposition
module    Rendering
module    output

45    46    47    TM
sheet    48

runlist

BM
output
files
(sheet)

49    Printing engine

Fig. 4    PRIOR ART

Fig. 5  PRIOR ART

Fig. 6   PRIOR ART

Fig. 7

Fig. 8

European Patent
Office

**EUROPEAN SEARCH REPORT**

Application Number

EP 02 10 2412

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 031 916 A (ADOBE SYSTEMS INC) 30 August 2000 (2000-08-30) * the whole document * | 1-6 | G06F3/12 |
| A | WO 01 16790 A (CREO PRODUCTS INC ;GNOCATO JOE (CA); FIRSTBROOK JIM (CA); MIRMOTAH) 8 March 2001 (2001-03-08) * page 5, line 26 - page 9, line 36; figures 2-4 * | 1-6 | |
| D,A | US 6 046 818 A (BENSON CRAIG H) 4 April 2000 (2000-04-04) * column 8, line 47 - column 10, line 3; figure 4 * | 1-6 | |
| | | | TECHNICAL FIELDS SEARCHED (Int.Cl.7) |
| | | | G07F G06F |

The present search report has been drawn up for all claims

| Place of search | Date of completion of the search | Examiner |
|---|---|---|
| THE HAGUE | 10 March 2003 | Degraeve, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 & : member of the same patent family, corresponding document

EPO FORM 1503 03.82 (P04C01)

**EP 1 406 162 A1**

## ANNEX TO THE EUROPEAN SEARCH REPORT
## ON EUROPEAN PATENT APPLICATION NO.

EP 02 10 2412

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2003

| Patent document cited in search report | | | Publication date | Patent family member(s) | | Publication date |
|---|---|---|---|---|---|---|
| EP | 1031916 | A | 30-08-2000 | US | 6411396 B1 | 25-06-2002 |
| | | | | EP | 1031916 A2 | 30-08-2000 |
| WO | 0116790 | A | 08-03-2001 | AU | 6814000 A | 26-03-2001 |
| | | | | WO | 0116790 A1 | 08-03-2001 |
| | | | | EP | 1206743 A1 | 22-05-2002 |
| US | 6046818 | A | 04-04-2000 | EP | 0887746 A2 | 30-12-1998 |
| | | | | JP | 11105368 A | 20-04-1999 |

EPO FORM P0459

For more details about this annex : see Official Journal of the European Patent Office, No. 12/82

19